# EUROPEAN PATENT SPECIFICATION

(11) **EP 3 718 866 B1**
(45) Date of publication and mention of the grant of the patent: **12.10.2022**
(21) Application number: 20166318.4
(22) Date of filing: 27.03.2020
(51) Int. Cl.: B62D 43/00, F16B 2/18, F16B 21/02

(54) **DEVICE FOR FASTENING A WHEEL**
VORRICHTUNG ZUR BEFESTIGUNG EINES RADES
DISPOSITIF DE FIXATION D'UNE ROUE

(30) Priority: 04.04.2019 IT 201900005050
(43) Date of publication of application: 07.10.2020
(73) Proprietor: Takler S.r.l., 70122 Altamura, Bari (IT)
(72) Inventor: LORUSSO, Lorenzo, 70022 Altamura, BARI (IT)
(74) Representative: Busana, Omar

(56) References cited:
- EP-A2- 1 830 022
- FR-A1- 2 998 535
- US-A- 1 730 121

## Description

### FIELD OF APPLICATION

The present invention relates to a device for fastening a spare wheel. In particular, the present invention relates to a device for fastening a spare wheel of an industrial vehicle, such as for example a truck, trailer or a semi-trailer.

### PRIOR ART

As is known, fastening devices, also defined in technical jargon as tightening handles, are devices used to make it possible to fasten the spare wheel to a wheel-holding structure and to ensure that it is tightened in a completely safe manner when the vehicle is travelling.

The majority of the known devices comprise a small handle that screws into a thread by means of the screw/nut system. In order to tighten the spare wheel, it is necessary to screw a plate, which compresses the rim of the spare wheel, to the frame of the wheel-holding structure.

Since this is a device that is positioned externally and subjected to atmospheric agents, high temperatures or very low temperatures, special attention needs to be paid to its operating conditions during the design phase.

For example, the threaded coupling can be subjected to the formation of rust, with the rotary plate of the small handle consequently getting stuck and the inability to remove the spare wheel for replacement purposes. In this case, the carrier is forced to reach the closest gas station in order to replace the wheel, thus risking tearing the punctured tyre and leaving dangerous debris on the road for other drivers.

The devices used from the prior art, albeit widely used and appreciated, are not without drawbacks.

In particular, the threaded coupling can be subjected to oxidation, with the resultant formation of rust and the plate of the small handle getting stuck such that removal of the spare wheel is impeded.

Furthermore, the plate requires a certain amount of time to rotate until it reaches the desired degree of tightness.

There is still no substantial end stop during the tightening phase. An optimum degree of tightness is therefore set on the basis of the operator's awareness and experience.

Furthermore, it is substantially difficult to carry out the operation of screwing in the small handle due to the reduced space of the housing of the wheel-holding frame.

FR 2 998 535 A1 discloses an example of a known device for fastening a spare wheel according to the preamble of claim 1.

### PRESENTATION OF THE INVENTION

The object of the present invention is therefore to solve at least partially the problems and limitations cited with reference to the prior art.

Therefore, a first task of the present invention is to provide a device for fastening a spare wheel that is not affected by the problems associated with the corrosion of the threaded coupling.

Furthermore, a second task of the present invention is to provide a device for fastening a spare wheel, in which the tightening time required is drastically reduced compared with the devices in the prior art.

Once again, another task is to provide a device for fastening a spare wheel, in which an optimum degree of tightness is defined by an end stop and is therefore no longer determined on the basis of the operator's awareness and experience.

Furthermore, another task of the present invention is to provide a device for fastening a spare wheel, in which the operations are simplified so as not to be influenced by the reduced available space.

The object and the tasks are achieved by a device for fastening a spare wheel according to claim 1.

### DESCRIPTION OF THE DRAWINGS

Additional features and the advantages of the present invention will become clearer from the following description of preferred and non-limiting embodiments thereof, in which:
- Fig. 1 is a schematic view of an assembly made up of a spare wheel, a support for a spare wheel and a device for fastening a spare wheel according to one embodiment of the present invention in a first use configuration;

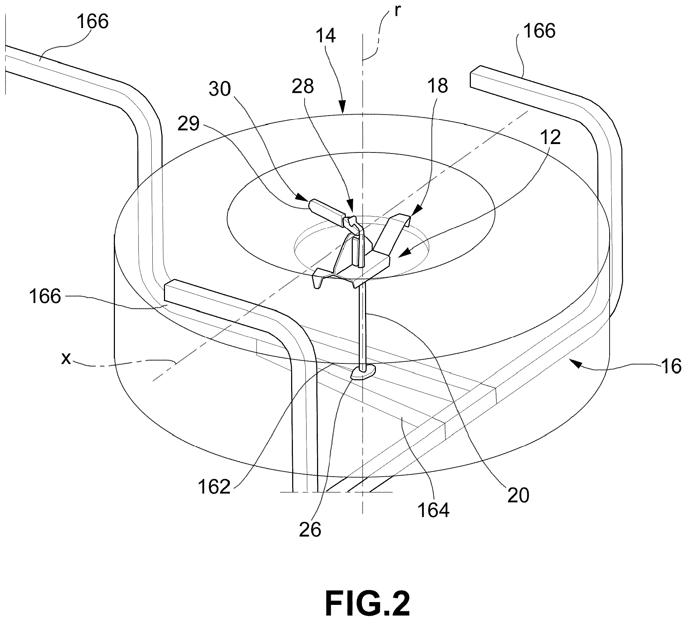

- Fig. 2 is a schematic view of an assembly made up of a spare wheel, a support for a spare wheel and a device for fastening a spare wheel according to one embodiment of the present invention in a second use configuration;
- Fig. 3 is a schematic and partial perspective view of a device for fastening a spare wheel according to a possible embodiment of the present invention;
- Fig. 4 is a schematic front view of a component of a device for fastening a spare wheel according to one embodiment of the present invention;
- Fig. 5 is a schematic lateral view of the component in Fig. 4;

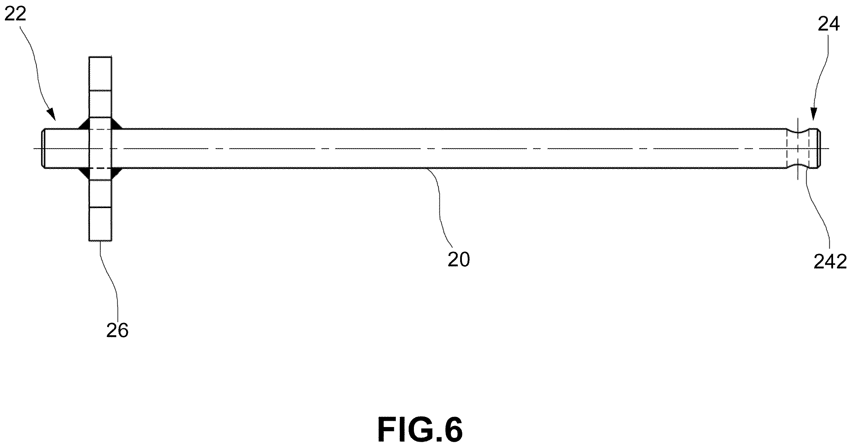

- Fig. 6 is a schematic view of a component of a device for fastening a spare wheel according to one embodiment of the present invention; and
- Fig. 7 is a schematic view of a component of a device for fastening a spare wheel according to one embodiment of the present invention.

The elements or parts of elements that the embodiments described in the following have in common will be indicated by the same reference numerals.

### DETAILED DESCRIPTION

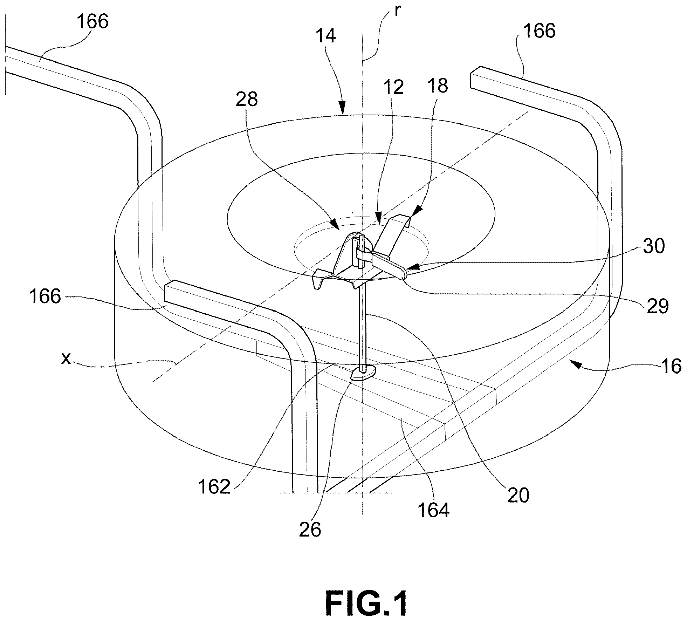

In Fig. 1, reference numeral 12 indicates, as a whole, a device 12 for fastening a wheel 14 to a frame 16 according to one embodiment of the present invention.

The fastening device 12 comprises:
- retention means 18 for a wheel 14;
- a bar 20 comprising a first end 22 and a second end 24; on said first end 22 being provided coupling means 26 to said frame 16, said retention means 18 being arranged close to said second end 24 of said bar 20;
- an actuation mechanism 28 adapted to move said retention means 18 and said coupling means 26 relative to one another in a direction (r).

In particular, the actuation mechanism 28 is adapted to move said retention means 18 and said coupling means 26 relative to one another in a direction (r) between:
- a fixing position for said wheel 14, in which said retention means 18 and said coupling means 26 are close to one another; and
- a disengagement position for said wheel 14, in which said retention means 18 and said coupling means 26 are spaced apart from each other with respect to the fixing position.

The actuation mechanism 28 comprises a control lever 30 that can rotate about an axis of rotation (x). The actuation mechanism 28 is adapted to move said retention means 18 and said coupling means 26 relative to one another between said fixing position and said disengagement position, following a rotational movement of said control lever 30.

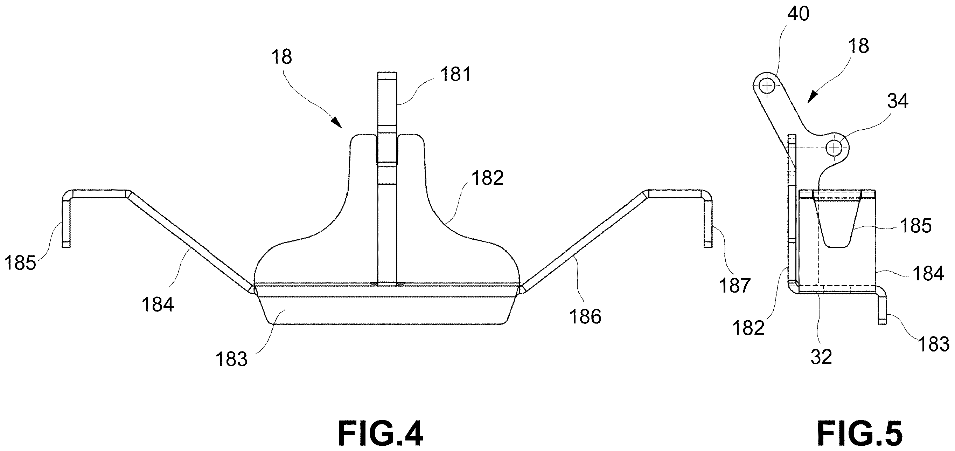

With reference to Fig. 4 and 5, the retention means 18 may comprise a body 182 from which at least two side wings 184, 186 protrude, which are provided with side hooks 185, 187 at the ends.

Advantageously, the body 182, the two wings 184, 186 and the side hooks 185, 187 can be made by suitably bending a shaped metal sheet. In accordance with a possible embodiment, the side wings 184, 186 are arranged with respect to the body 182 so as to form a V. The side hooks 185, 187 that can advantageously be obtained by bending can be inclined with respect to the particular side wing 184, 186 so as to form a substantial U shape together therewith, contrary to the V shape between the body 182 and the side wings 184, 186.

During use, the side hooks 185, 187 are adapted to hold the wheel in position, for example by being inserted into holes that are normally provided in the wheels.

In accordance with a possible embodiment, the retention means 18 are provided with a sliding seat 32 for the bar 20.

The retention means 18 can also comprise a connection portion 181, which protrudes from said body 182 and adapted to be rotatably connected to a connecting end 33 of said control lever 30.

In accordance with a possible embodiment shown in Fig. 4 and 5, the connection portion 181 is provided in a portion that is substantially central with respect to the two side wings 184, 186. The connection portion 181 may comprise a hole 34 that can interact with a respective pin 341 in order to form the rotatable connection with the control lever 30.

In accordance with a possible embodiment, the axis of rotation (x) of the control lever 30 is substantially perpendicular to the direction (r) of relative movement between the retention means 18 and the coupling means 26.

In the region of the body 182, the retention means 18 can comprise a stiffening edge 183 formed by bending the body 182.

In accordance with a possible embodiment, the connection portion 181 can be a portion connected to the body 182 by means of welding.

Advantageously, in a distal position with respect to the body 182, the connection portion can comprise a safety seat 40 for a safety element 50. In accordance with a possible embodiment, the safety seat 40 can be a through-hole.

In accordance with a possible embodiment, the retention means 18 slide on the bar 20.

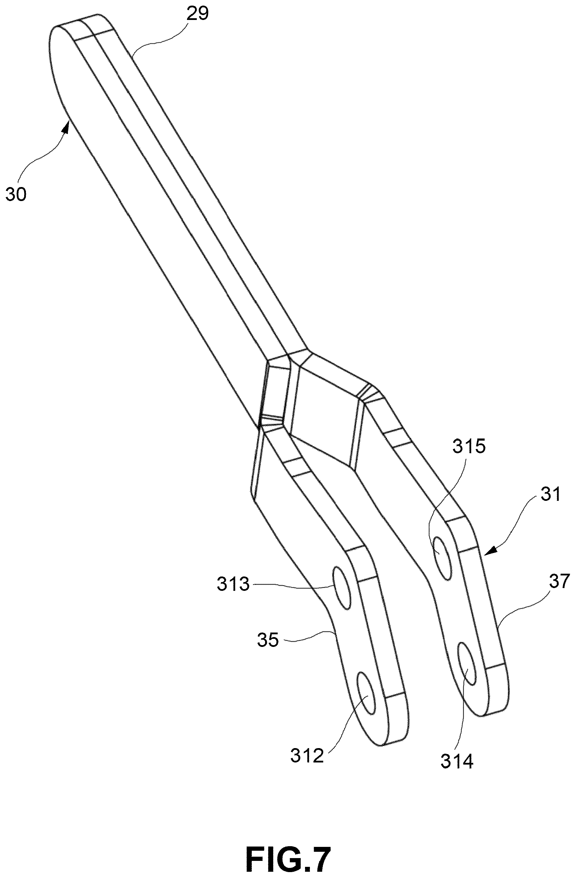

In accordance with a possible embodiment that can be seen in the example in Fig. 7, the control lever can be substantially Y-shaped, in which a first end defines the handle, and a second end that comprises two parallel arms 35, 37 defines the connecting end 31. In particular, the connecting end 31 can comprise two connecting holes 312, 314 arranged in corresponding positions on each arm 35, 37.

The connecting holes 312, 314 are adapted to be engaged by the pin 341 to form the rotatable connection between the control lever 30 and the connection portion 181 of the retention means 18.

As can be seen in the attached drawings, the connection portion 181 can be arranged between the two arms 35, 37 of the connecting end 31.

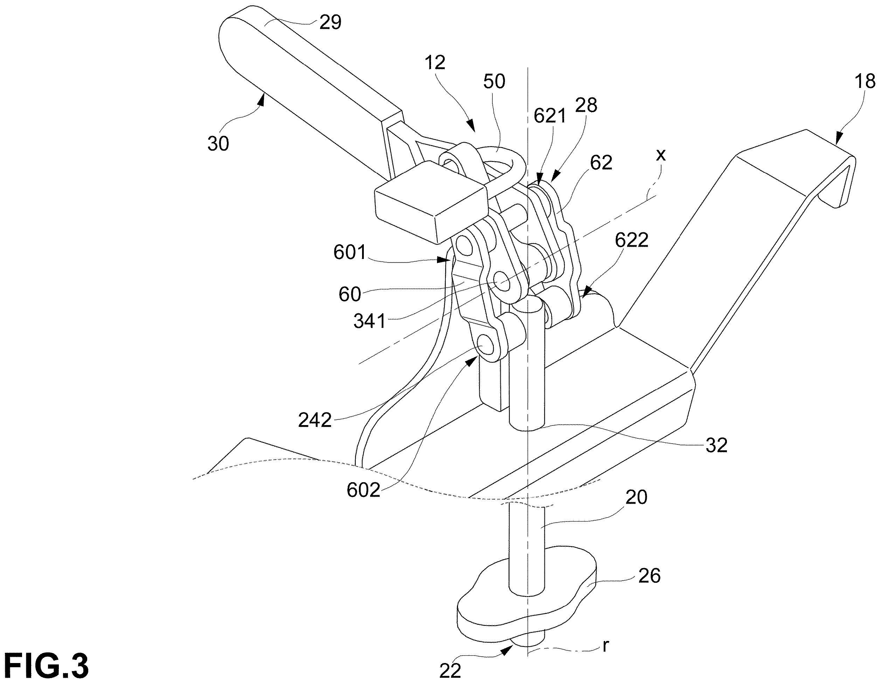

With reference to Fig. 3 and 7, at the connecting end 31, the control lever 30 can be rotatably connected to a first end 601, 621 of at least one lateral spacer 60, 62 in a position between the handle 29 and the rotatable connection between the control lever 30 and the retention means 18. The second end 602, 622 of the at least one spacer 60, 62 can be rotatably connected to the second end 24 of the bar 20.

In accordance with a possible embodiment of the present invention, the spacers 60, 62 are two and associated with the respective arms 35, 37 of the connecting end 31 of the control lever 30.

The spacers 60, 62 can advantageously be positioned externally with respect to the arms 35, 37 of the connecting end 31 of the control lever 30.

In this case, too, the rotatable connections can be formed by coupling holes 313, 315 to respective pins.

In particular, the bar 20 can be provided with a hole 241 that can be coupled to the connecting end 31 of the control lever 30 by means of a pin 242.

As shown in the attached drawings, the frame 16 can comprise a bracket 164 for supporting the wheel 14 and brackets 166 for fixing it to a structure of a vehicle.

The actuation mechanism functions as follows.

Fig. 1 shows a possible operating condition in which the means 26 for coupling to the frame are at the greatest possible spacing from the retention means 18. In this position, the fastening device 12 that is arranged between the frame 16 and the wheel 14 makes it possible to be able to engage or release the coupling means 26 from a particular seat 162 arranged in the frame 16.

By means of a rotational movement of the control lever 30 about the axis (x), the actuation mechanism 28 moves the bar 20 with respect to the retention means 18, moving the retention means 18 closer to the coupling means. In this position, the coupling means 26 are not able to release from the particular seat 162 arranged in the frame 16.

In particular, in this position, the retention means 18 that comprise side hooks 185, 187 at the ends engage in portions of the wheel 14 in order to lock said wheel with respect to the frame 16.

In accordance with a possible embodiment of the present invention shown in Fig. 3, for example, in the fixing position, the safety seat 40 protrudes with respect to the control lever 30. In particular, the safety seat 40 can protrude from the control lever through the connecting end 31. Advantageously, a safety element 50 can be inserted into the safety seat 40 in order to block the rotational movement of the control lever 30 to prevent any involuntary removal of the device 12 from the seat 162 of the frame 16.

In accordance with a possible embodiment, the safety element 50 can be a padlock or a pin, for example.

As can be seen in Fig. 3, which shows a padlock, the contact between the two parallel arms 35, 37 and the padlock prevents the control lever 30 from rotating.

With regard to the materials used, the retention element 18, the bar 20 and the coupling means 26 can be made of DD11 steel, and can be subjected to galvanization treatments with black zinc nickel.

In accordance with a possible embodiment of the present invention, the actuation mechanism can be assembled using rivet pins and Teflon bushings to reduce friction during the rotational movement of the levers.

As can be inferred from that described, the mechanical features of the steel are taken advantage of in terms of the elastic deformation of the retention element 18. Essentially, the device 12 comprises a lever system that, by means of a simple movement of the control lever, ensures that the wheel is safely tightened.

On account of a shear pin that can also be composed of a padlock and that can be inserted between the control lever and the retention means, opening of said control lever 30 is ruled out.

The advantages achieved by the present invention are therefore now evident.

In particular, the fastening device is not affected by the problems associated with the corrosion of the threaded coupling.

Furthermore, the tightening time required is drastically reduced compared with the devices of the prior art. In fact, one rotation of the control lever is sufficient.

Once again, the optimum degree of tightness is defined by an end stop and is therefore no longer determined on the basis of the operator's awareness and experience.

Furthermore, the operations are simple so as not to be influenced by the reduced space available.

A skilled person could modify the embodiments described above and/or substitute elements described with equivalent elements in order to meet specific requirements, without thereby departing from the scope of the attached claims.

## Claims

1. Device for fastening (12) a wheel (14) to a frame (16) comprising:
- retention means (18) for a wheel (14);
- a bar (20) comprising a first end (22) and a second end (24), on said first end (22) coupling means (26) with said frame (16) being provided, said retention means (18) being arranged near said second end (24) of said bar (20);
- an actuation mechanism (28) adapted to move relative to each other along a direction (r) said retention means (18) and said coupling means (26) between:
- a fixing position for said wheel (14) wherein said retention means (18) and said coupling means (26) are close together; and
- a disengagement position for said wheel (14) wherein said retention means (18) and said coupling means (26) are spaced apart from each other with respect to the fixing position;
wherein said actuation mechanism (28) comprises a control lever (30) adapted to rotate around a rotation axis (x), said actuation mechanism (28) being adapted to move relative to each other said retention means (18) and said coupling means (26), between said fixing position and said disengagement position, following a rotation of said control lever (30);
**characterized in that** the retention means (18) comprise a connection portion (181), adapted to be rotatably connected with said control lever (30), at a connecting end (33), said connection portion (181) comprising a hole (34) adapted to interact with a respective pin (341) to form the rotatable connection with the control lever (30).

2. Fastening device (12) according to the preceding claim, **characterized in that** said rotation axis (x) of said control lever (30) is substantially perpendicular to said direction (r) of relative movement between said retention means (18) and said coupling means (26).

3. Fastening device (12) according to any one of the preceding claims, **characterized in that** said retention means (18) comprise a body (182) from which at least two side wings (184, 186) protrude, provided at the ends with side hooks (185, 187).

4. Fastening device (12) according to any one of the preceding claims, **characterized in that** said retention means (18) are provided with a sliding seat (32) for said bar (20).

5. Fastening device (12) according to any one of the preceding claims, **characterized in that** the control lever (30) is substantially Y-shaped, wherein a first end defines a handle (29), and a second end comprising two parallel arms (35, 37) defines the connecting end (31).

6. Fastening device (12) according to the preceding claim, **characterized in that** the control lever (30), at the connecting end (31), in a position between the handle (29), and the rotatable connection between the control lever (30) and the retention means (18), is rotatably connected to a first end (601, 621) of at least one lateral spacer (60, 62), the second end (602, 622) of the at least one spacer (60, 62) being rotatably connected to the second end (24) of the bar (20).

7. Fastening device (12), according to the preceding claim, **characterized in that** the spacers (60, 62) are two in number, associated with the respective arms (35, 37) of the connecting end (31) of the control lever (30), said spacers (60, 62) being positioned externally with respect to the arms (35, 37) of the connecting end (31) of the control lever (30).

8. Fastening device (12) according to any one of the preceding claims, **characterized in that** the connection portion (181) distal to the body (182) comprises a safety seat (40) for a safety element (50), in the fastening position said safety seat (40) protruding with respect to said control lever (30).

9. Fastening device (12) according to claim 8, **characterized in that** the safety element (50) is a padlock.

10. Apparatus for supporting and securing a spare wheel to a structure of a vehicle comprising:
- a fastening device according to any one of the preceding claims; and
- a frame (16) provided with a support bracket (164) for a wheel (14), fixing brackets (166) to a structure of a vehicle, on said support bracket (164) a seat (162) being provided for said coupling means (26).

## Patentansprüche

1. Vorrichtung (12) zum Befestigen eines Rades (14) an einem Rahmen (16), umfassend:
- Haltemittel (18) für ein Rad (14);
- eine Stange (20), welche ein erstes Ende (22) und ein zweites Ende (24) umfasst, wobei an dem ersten Ende (22) Kopplungsmittel (26) mit dem Rahmen (16) bereitgestellt sind, wobei die Haltemittel (18) in der Nähe des zweiten Endes (24) der Stange (20) angeordnet sind;
- einen Betätigungsmechanismus (28), welcher dazu eingerichtet ist, die Haltemittel (18) und die Kopplungsmittel (26) relativ zueinander entlang einer Richtung (r) zu bewegen zwischen:
- einer Fixierposition für das Rad (14), wobei die Haltemittel (18) und die Kopplungsmittel (26) nahe aneinander sind; und
- einer Löseposition für das Rad (14), wobei die Haltemittel (18) und die Kopplungsmittel (26) in Bezug auf die Fixierposition voneinander beabstandet sind;
wobei der Betätigungsmechanismus (28) einen Steuerhebel (30) umfasst, welcher dazu eingerichtet ist, um eine Rotationsachse (x) zu rotieren, wobei der Betätigungsmechanismus (28) dazu eingerichtet ist, die Haltemittel (18) und die Kopplungsmittel (26), einer Rotation des Steuerhebels (30) folgend, zwischen der Fixierposition und der Löseposition relativ zueinander zu bewegen;
**dadurch gekennzeichnet, dass** die Haltemittel (18) einen Verbindungsabschnitt (181) umfassen, welcher dazu eingerichtet ist, an einem Verbindungsende (33) rotierbar mit dem Steuerhebel (30) verbunden zu sein, wobei der Verbindungsabschnitt (181) ein Loch (34) umfasst, welches dazu eingerichtet ist, mit einem entsprechenden Stift (341) zusammenzuwirken, um die rotierbare Verbindung mit dem Steuerhebel (30) zu bilden.

2. Befestigungsvorrichtung (12) nach dem vorhergehenden Anspruch, **dadurch gekennzeichnet, dass** die Rotationsachse (x) des Steuerhebels (30) im Wesentlichen senkrecht zu der Richtung (r) einer Relativbewegung zwischen den Haltemitteln (18) und den Kopplungsmitteln (26) ist.

3. Befestigungsvorrichtung (12) nach einem der vorhergehenden Ansprüche, **dadurch gekennzeichnet, dass** die Haltemittel (18) einen Körper (182) umfassen, von welchem wenigstens zwei seitliche Flügel (184, 186) vorstehen, welche an den Enden mit seitlichen Haken (185, 187) bereitgestellt sind.

4. Befestigungsvorrichtung (12) nach einem der vorhergehenden Ansprüche, **dadurch gekennzeichnet, dass** die Haltemittel (18) mit einem Schiebesitz (32) für die Stange (20) bereitgestellt sind.

5. Befestigungsvorrichtung (12) nach einem der vorhergehenden Ansprüche, **dadurch gekennzeichnet, dass** der Steuerhebel (30) im Wesentlichen Y-förmig ist, wobei ein erstes Ende einen Griff (29) definiert und ein zweites Ende, welches zwei parallele Arme (35, 37) umfasst, das Verbindungsende (31) definiert.

6. Befestigungsvorrichtung (12) nach dem vorhergehenden Anspruch, **dadurch gekennzeichnet, dass** der Steuerhebel (30), an dem Verbindungsende (31), in einer Position zwischen dem Griff (29) und der rotierbaren Verbindung zwischen dem Steuerhebel (30) und den Haltemitteln (18), rotierbar mit einem ersten Ende (601, 621) wenigstens eines lateralen Abstandshalters (60, 62) verbunden ist, wobei das zweite Ende (602, 622) des wenigstens einen Abstandshalters (60, 62) rotierbar mit dem zweiten Ende (24) der Stange (20) verbunden ist.

7. Befestigungsvorrichtung (12) nach dem vorhergehenden Anspruch, **dadurch gekennzeichnet, dass** die Abstandshalter (60, 62) zwei an der Zahl sind, den jeweiligen Armen (35, 37) des Verbindungsendes (31) des Steuerhebels (30) zugeordnet, wobei die Abstandshalter (60, 62) außerhalb in Bezug auf die Arme (35, 37) des Verbindungsendes (31) des Steuerhebels (30) positioniert sind.

8. Befestigungsvorrichtung (12) nach einem der vorhergehenden Ansprüche, **dadurch gekennzeichnet, dass** der Verbindungsabschnitt (181) distal zu dem Körper (128) einen Sicherungssitz (40) für ein Sicherungselement (50) umfasst, wobei der Sicherungssitz (40) in der Befestigungsposition in Bezug auf den Steuerhebel (30) vorsteht.

9. Befestigungsvorrichtung (12) nach Anspruch 8, **dadurch gekennzeichnet, dass** das Sicherungselement (50) ein Schloss ist.

10. Vorrichtung zum Haltern und Sichern eines Ersatzrades an einer Struktur eines Fahrzeugs, umfassend:
- eine Befestigungsvorrichtung nach einem der vorhergehenden Ansprüche; und
- einen Rahmen (16), welcher mit einer Halterungsklammer (164) für ein Rad (14) und Befestigungsklammern (166) an einer Struktur eines Fahrzeugs bereitgestellt ist, wobei an der Halterungsklammer (164) ein Sitz (162) für die Kopplungsmittel (26) bereitgestellt ist.

## Revendications

1. Dispositif de fixation (12) d'une roue (14) à un cadre (16), comprenant :
- des moyens de retenu (18) pour une roue (14) ;
- une barre (20) comprenant une première extrémité (22) et une deuxième extrémité (24), des moyens d'attachement (26) au cadre (16) étant disposés à la première extrémité (22), les moyens de retenu (18) étant disposés proche de la deuxième extrémité (24) de la barre (20) ;
- un mécanisme d'actionnement (28) configuré pour déplacer, l'un par rapport à l'autre dans une direction (r), les moyens de retenu (18) et les moyens d'attachement (26) entre :
- une position de fixation pour la roue (14), les moyens de retenu (18) et les moyens d'attachement (26) étant proches les uns des autres, et
- une position de libération pour la roue (14), les moyens de retenu (18) et les moyens d'attachement (26) étant éloignés les uns des autres par rapport à la position de fixation ;
le mécanisme d'actionnement (28) comprenant un levier de commande (30) configuré pour tourner autour d'un axe de rotation (x), le mécanisme d'actionnement (28) étant configuré pour déplacer, l'un par rapport à l'autre, les moyens de retenu (18) et les moyens d'attachement (26) entre la position de fixation et la position de libération à la suite d'une rotation du levier de commande (30) ;
**caractérisé en ce que** les moyens de retenu (18) comprennent une partie d'attachement (181) agencée pour être reliée de façon rotative, à une extrémité d'attachement (33), au levier de commande (30), la partie d'attachement (181) comprenant un orifice (34) agencé pour coopérer avec un axe (341) respectif pour constituer l'attachement rotatif au levier de commande (30).

2. Dispositif de fixation (12) selon la revendication précédente, **caractérisé en ce que** l'axe de rotation (x) du levier de commande (30) est sensiblement perpendiculaire à la direction (r) de déplacement relatif entre les moyens de retenu (18) et les moyens d'attachement (26).

3. Dispositif de fixation (12) selon l'une des revendications précédentes, **caractérisé en ce que** les moyens de retenu (18) comprennent un corps (182) à partir duquel au moins deux ailes latérales (184, 186) font saillie, pourvues, aux extrémités, de crochets latéraux (185, 187).

4. Dispositif de fixation (12) selon l'une des revendications précédentes, **caractérisé en ce que** les moyens de retenu (18) sont pourvus d'une assise coulissante (32) pour la barre (20).

5. Dispositif de fixation (12) selon l'une des revendications précédentes, **caractérisé en ce que** le levier de commande (30) a essentiellement la forme d'un Y, une première extrémité constituant une poignée (29) et une deuxième extrémité comprenant deux bras parallèles (35, 37) constituant l'extrémité d'attachement (31).

6. Dispositif de fixation (12) selon la revendication précédente, **caractérisé en ce que** le levier de commande (30) est attaché, à l'extrémité d'attachement (31), dans une position entre la poignée (29) et la connexion rotative entre le levier de commande (30) et les moyens de retenu (18), de façon rotative à une première extrémité (601, 621) d'au moins une entretoise latérale (60, 62), la deuxième extrémité (602, 622) de ladite entretoise (60, 62) étant attachée de façon rotative à la deuxième extrémité (24) de la barre (20).

7. Dispositif de fixation (12) selon la revendication précédente, **caractérisé en ce que** les entretoises (60, 62) sont au nombre de deux, associées aux bras respectifs (35, 37) de l'extrémité d'attachement (31) du levier de commande (30), les entretoises (60, 62) étant disposées à l'extérieur par rapport aux bras (35, 37) de l'extrémité d'attachement (31) du levier de commande (30).

8. Dispositif de fixation (12) selon l'une des revendications précédentes, **caractérisé en ce que** la partie d'attachement (181) éloignée du corps (182) comprend une assise de sécurité (40) pour un élément de sécurité (50), dans la position de fixation, l'assise de sécurité (40) faisant saillie par rapport au levier de commande (30).

9. Dispositif de fixation (12) selon la revendication 8, **caractérisé en ce que** l'élément de sécurité (50) est un cadenas.

10. Appareil pour porter et sécuriser une roue de secours à une structure d'un véhicule, comprenant :
- un dispositif de fixation selon l'une des revendications précédentes et
- un cadre (16) pourvu d'un support (164) pour une roue (14) et de bras de fixation (166) à une structure d'un véhicule, sur le support (164), une assise (162) étant prévue pour les moyens d'attachement (26).
